# EUROPEAN PATENT SPECIFICATION

(11) **EP 2 444 710 B1**
(45) Date of publication and mention of the grant of the patent: **24.07.2013**
(21) Application number: 11290487.5
(22) Date of filing: 19.10.2011
(51) Int. Cl.: F16L 43/00, F16L 45/00, F16L 55/033

(54) **Acoustic elbow for fluid transport pipelines**
Akustikkrümmer für Flüssigkeitstransportrohrleitungen
Coude acoustique pour canalisations de transport de fluides

(30) Priority: 21.10.2010 FR 1058627
(43) Date of publication of application: 25.04.2012
(73) Proprietor: Raccords et Plastiques Nicoll, 49300 Cholet (FR)
(72) Inventor: Leprètre, Jérémie, 49000 Angers (FR); Lecointe, Nicolas, 44400 Rezé (FR); Pichon, Daniel, 85290 Saint Laurent sur Sèvre (FR); Poisson, Charles, 49300 Cholet (FR); Yvai, Fabien, 49300 Cholet (FR)
(74) Representative: Sonnenberg, Fred

(56) References cited:
- CN-Y- 2 783 102
- DE-A1- 2 212 889
- DE-C- 398 241
- DE-C- 455 139
- DE-C- 811 221
- DE-C- 875 502
- JP-A- 5 302 693
- JP-A- 8 013 567
- JP-A- 11 344 194
- JP-A- 2000 304 190
- JP-U- 3 065 464
- US-A- 1 960 412
- DATABASE EPODOC EUROPEAN PATENT OFFICE, THE HAGUE, NL; 11 August 1999 (1999-08-11), Liao Huancai: "Inner Pipe Water Hammer Arester", XP002646398, -& CN 2 332 869 Y (LIAO HUANCAI [CN]) 11 August 1999 (1999-08-11)

## Description

The present invention concerns an acoustic elbow for fluid transport pipelines in buildings and networks.

It is known, for example from documents KR 2006-0062 820 and KR 2004-0027 488, how to make fluid transport pipeline elbows provided on the inside with one or more layers of soundproofing product.

It is also known from document JP 5263 982 how to take a fluid transport pipeline elbow made of injection molded material and cover it with heated metal and apply to the inside of the elbow a pressure to blow the wall of the elbow toward the heated metal, thus making an elbow with a bulging part and an inspection hole.

Document DE 875 502 C1 discloses an acoustic elbow, comprising an upstream section, a downstream section, and an opening closed by a plug, the elbow having a curved portion between the upstream section and the downstream section, wherein a flexible impact piece is inserted in the opening, forming the inner complementary surface of the elbow, the impact piece being adapted to abut against a respective surface on the upstream section and the downstream surface, the impact piece comprising a longitudinal curvature in the longitudinal direction such that an internal surface of the impact piece comes into register with an internal surface of the upstream section and the downstream section respectively, the longitudinal curvature of the impact piece being adapted to allow the impact piece to conform to the inner shape of the curved portion.

Apart from the difficulties connected with the implementing of the blowing procedure, the results obtained are not convincing.

The purpose of the invention is to propose an acoustic elbow of simple design, easy implementation, and proven effectiveness. Preferably the elbow should be an inspectable elbow, allowing most preferably a destruction free access to the inner part.

This purpose is achieved by an acoustic elbow according to claim 1.

The object of the invention is an acoustic elbow for fluid transport pipelines in buildings and networks, comprising an upstream socket, a downstream socket, and an opening closed by a plug, characterized in that a flexible impact piece is inserted in the opening, forming the inner complementary surface of the elbow. According to the invention the impact piece is adapted to abut against a stop projecting from the upstream socket longitudinally towards the opening. The impact piece comprises a double curvature such that an internal surface of the impact piece comes into register with an internal surface of the upstream socket.

This configuration allows for the fluidic movement inside of the elbow to be maintained as a laminar flow, since in a preferable configuration the edge of the impact piece does neither create any discontinuity nor any surface rupture or any kind of gap, recess corner or abrupt surface change. Furthermore the presence of a inwardly provided stop, irrespective of the question as to whether the stop extends over the entire circumference of the opening or is only provided at one or more neuralgic locations, such as at the most upstream edge of the impact piece helps in avoiding the formation of gaps by the fluid flow.

According to other preferable characteristics of the invention:
- the axis of the opening essentially corresponds to the bisector of the angle formed by the axes of the two sockets;
- the impact piece has a collar toward the outside, and the opening has a guide bearing for the collar;
- the opening of the elbow is formed such that the stop is an annular limit stop for retention of the collar of the impact piece;
- the plug, when put in place at the opening, maintains the collar in the bearing, possibly by means of a brace;
- the impact piece has a flap that is applied to the inside of the downstream socket of the elbow;
- the space between the impact piece and the plug is filled with a gas or a soundproofing agent;
- the opening, the plug, the impact piece and the brace, if any, are in the shape of a circle or a polygon;
- a radial width of the limit stop mainly corresponds to a radial width of the impact piece;
- the double curvature of the impact piece is preferably constant at least along one direction of the double curvature, preferably along the two directions;
- the plug and the impact piece are formed as one piece member;
- the plug and the impact piece are connected by means of a ratchet, a clip, glue or welding.

All of the above features and characteristics may be provided for independently or in any of possible combinations.

The invention is described hereafter with reference to the enclosed drawing, in which:
Fig. 1 is a perspective view of an acoustic inspectable elbow according to a preferred embodiment of the invention, with an angle near 90°.
Fig. 2 is an exploded view in axial section of the acoustic inspectable elbow of Fig. 1 according to a first embodiment.
Fig. 3 is a view in axial section of the elbow of Fig. 2, assembled.
Fig. 4 is an exploded view in axial section of the elbow of Fig. 1 according to a second embodiment.
Fig. 5 is a view in axial section of the elbow of Fig. 4, assembled.
Fig. 6 is an exploded view in axial section of an acoustic inspectable elbow according to a preferred embodiment of the invention, with an angle near 135°.
Fig. 7 is a view in axial section of the elbow of Fig. 6, assembled.
Fig. 8 is an exploded view in axial section of an acoustic inspectable elbow according to another embodiment of the invention, with an angle near 135°.
Fig. 9 is a view in axial section of the elbow of Fig. 8, assembled.
Fig. 10 is a view of another acoustic elbow according to one aspect of the invention.
Fig. 11 is a view of an impact piece which can be used with the acoustic elbow of figure 10.

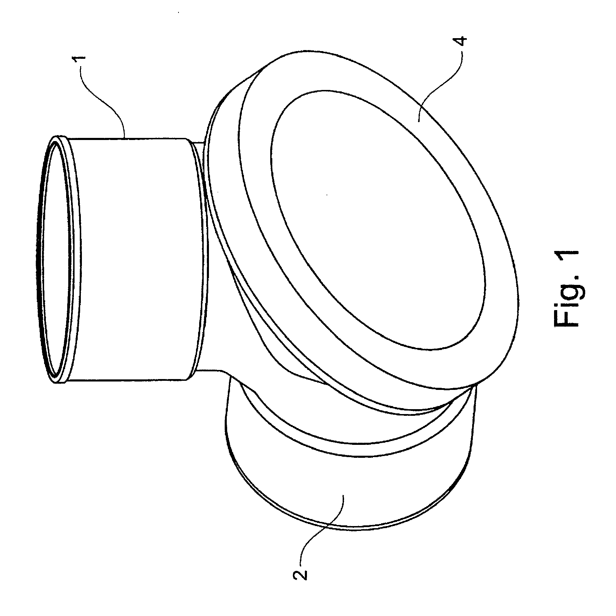

The acoustic inspectable elbow of Fig. 1 to 5 corresponds to an angle of around 90° between the axis of the upstream socket 1 and the axis of the downstream socket 2. It comprises a circular opening 3 in the curved portion of the elbow. This opening 3 is intended to be closed by a plug 4 that is secured, for example, by ratchet, by screwing, by clipping, by gluing or by welding.

Before putting the plug 4 in place, an impact piece 6 occupying almost the entire opening is inserted in the opening 3. This impact piece 6 is flexible, so as to dampen the shocks caused by the flow of the fluid and any solids entrained by the fluid in the pipeline.

The shape of the impact piece 6 is such that the inner surface of the pipeline in the region of the elbow is basically continuous, as if the elbow had been molded as a single piece. The impact piece 6 forms the complementary inner surface of the elbow.

The impact piece 6 has, toward the outside, a collar 7 that slides into the opening 3 of the elbow. The opening 3 of the elbow has a guide bearing 8 for the collar 7 and an annular limit stop 9 for retention of the collar 7.

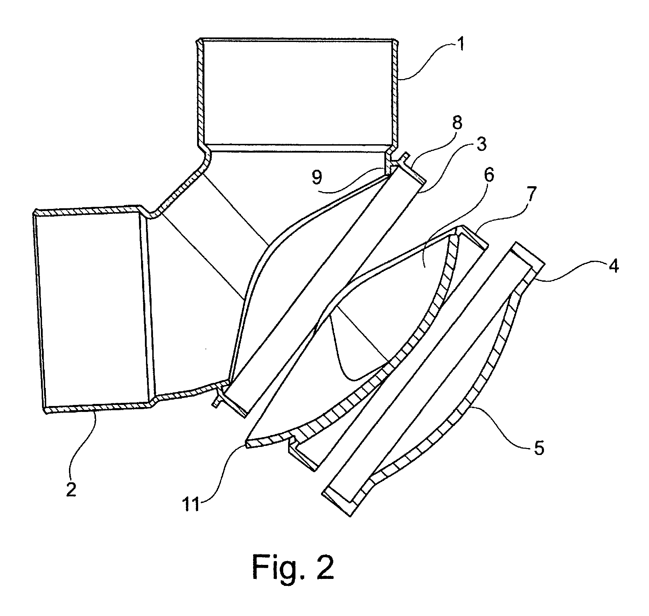

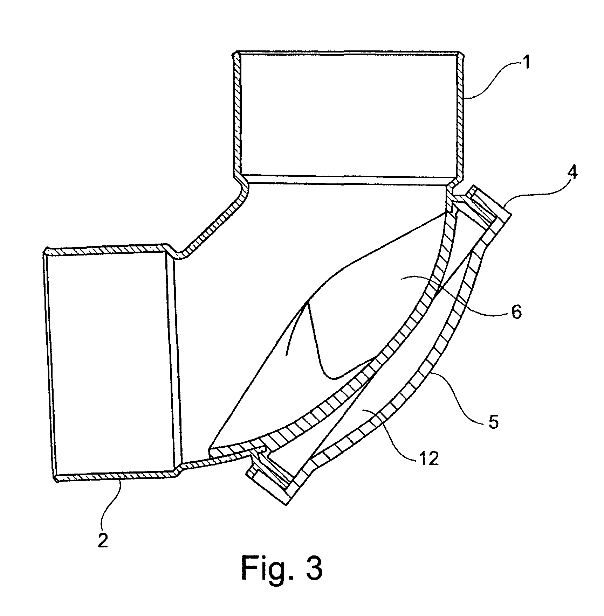

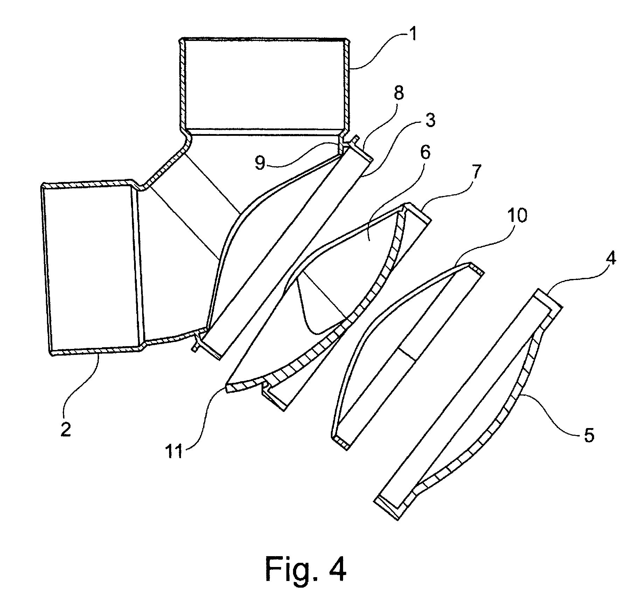

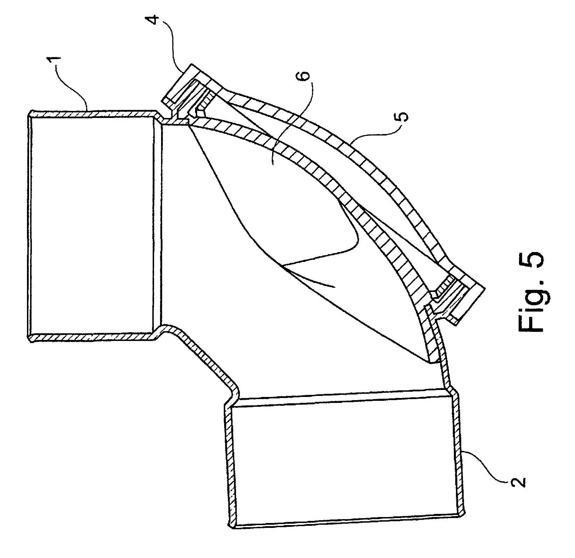

Thus, when the impact piece 6 is put in place, the collar is held in the bearing 8 and retained by the limit stop 9. When the plug 4 is put in place, the collar 7 is held by the plug 4 directly in the first embodiment of Fig. 2 and 3 or indirectly by means of a brace 10 in the second embodiment of Fig. 4 and 5.

The brace 10 is in the form of a ring that is placed inside the collar 7 of the impact piece; it enables a holding of the impact piece 6 by the plug 4 when the latter is in the closing position at the opening 3 of the elbow.

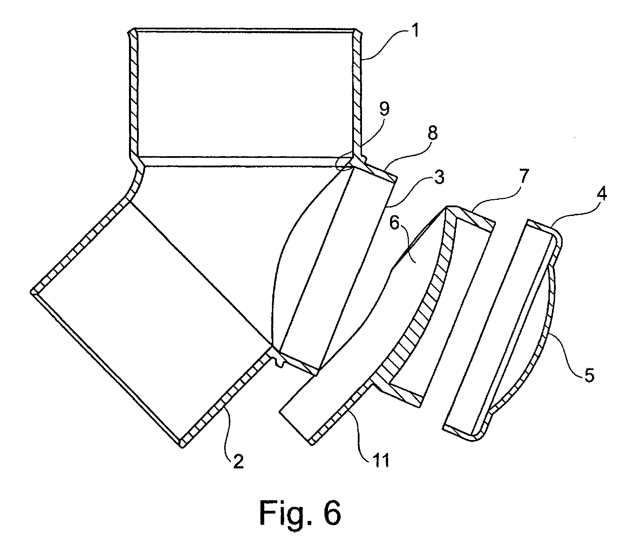

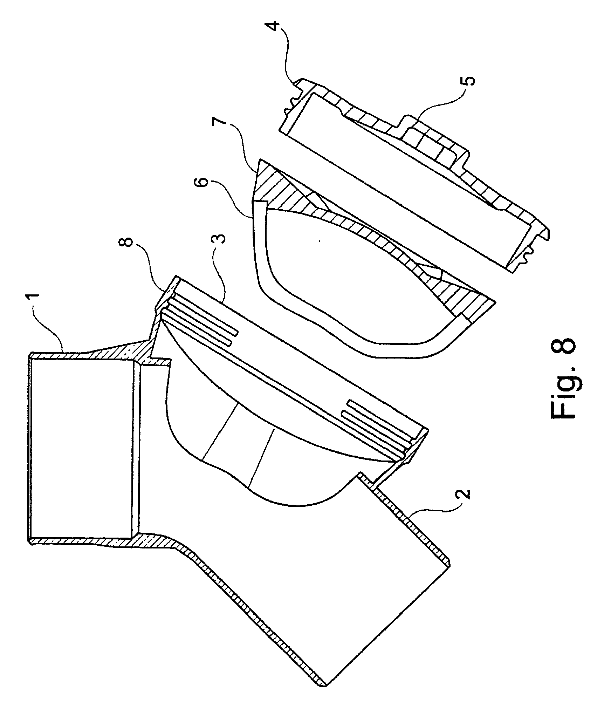

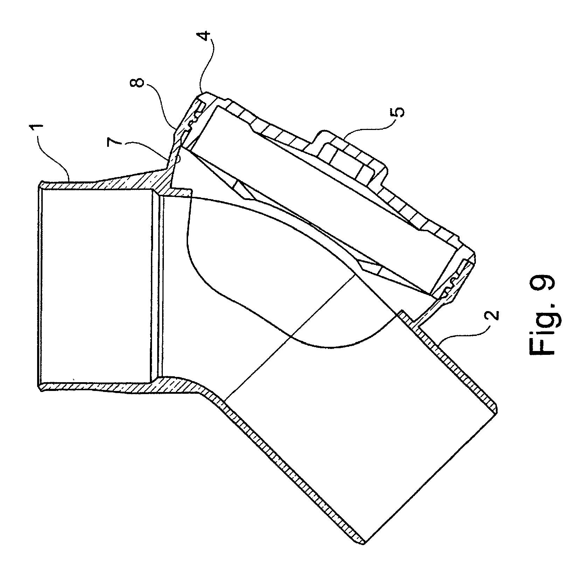

In the embodiment of Fig. 6 and 7, 8 and 9, the elbow has an angle of around 135°. The same references designate the same elements as in Fig. 1 to 3. The elbow, with its opening 3, its bearing 8 and its retention stop 9, the plug 4 are of the same nature as in Fig. 1 to 3. The impact piece 6 has the same collar 7, but to allow for the angle of 135° it is extended preferably downstream by a flap 11 that is applied to the inside of the downstream socket 2 of the elbow.

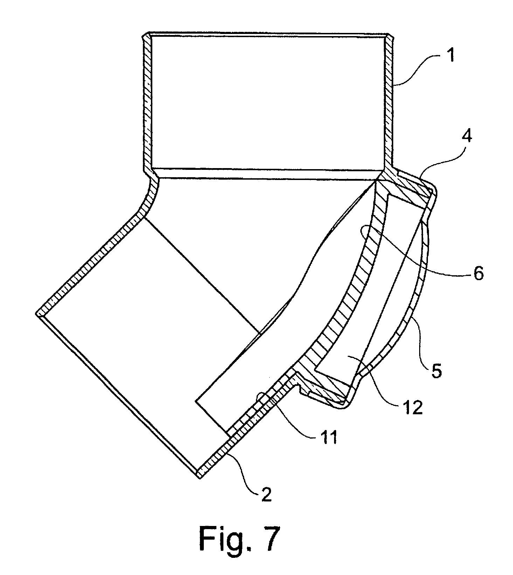

The arrangement of the impact piece 6 and its flap 11 is particularly evident in Fig. 7.

When the elbow is in service on a pipeline, there is a space 12 between the impact piece 6 and the plug 4, visible in Fig. 3 and 7. This space 12 is normally occupied by a gas, especially air. To increase the sound proofing of the flow of fluid in the elbow, this space 12 can be fitted with a soundproofing agent such as a mineral wool, for example.

The rigid elbow can have an angle between the upstream 1 and downstream 2 sockets between around 165° and 90°. The axis of the opening 3 corresponds essentially to the bisector of the angle formed by the axes of the two sockets. Therefore, when the plug 4 is removed, the brace 10 if any and the impact piece 6 can be removed and the elbow can be inspected both upstream and downstream to provide for the maintenance, at the two axes of the sockets, of the fluid transport network.

In Fig. 6 and 7, the impact piece 6 preferably has a flap 11 that penetrates essentially in the downstream socket 2 of the elbow. When the angle of the elbow is near 90°, as in Fig. 1 to 5, the impact piece 6 can advantageously have a flap 11 that penetrates slightly into the downstream socket 2.

The plug 4 is ratcheted, clipped, glued or welded to the bearing 8, delimiting the opening 3. To ensure a tight closure, a gasket is provided between the plug 4 and the collar 7 or the body 8 or the brace 10.

Optionally, the gasket can be supported by the collar 7 of the impact piece 6 and be clamped between the plug 4 and the bearing 8.

The embodiments described all have a circular plug. The opening of the elbow, the brace, the impact piece and the plug can be of the same polygonal shape, such as rectangular or hexagonal. In the case of a polygonal opening, the presence of a gasket is very highly recommended.

Preferably, the elbow and the plug are of plastic material, such as PVC, polypropylene or polyethylene. The impact piece is preferably of flexible plastic material, such as a high-density viscoelastic material.

Its thickness is between 0.5 and 20 mm, and preferably between 2 and 6 mm.

The presence of the impact piece ensures an attenuation of the sound intensity generated by the flow of the fluid and any shocks from solids entrained by the fluid. The presence of the plug and the easily dismountable nature of the impact piece ensure an ease of maintenance in the two axes of the pipelines of the network connected to the sockets of the elbow. The flexible nature of the impact piece provides a reduction in the mechanical stress experienced by the elbow.

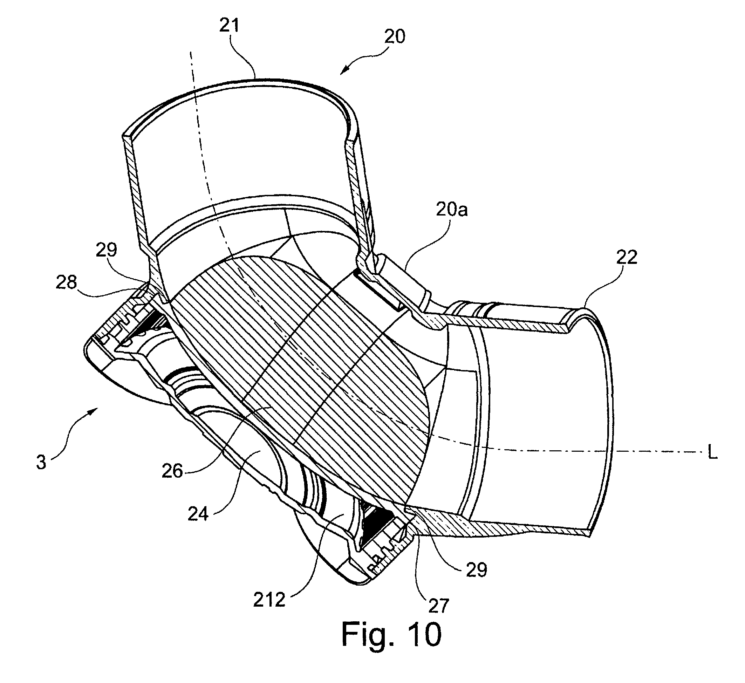

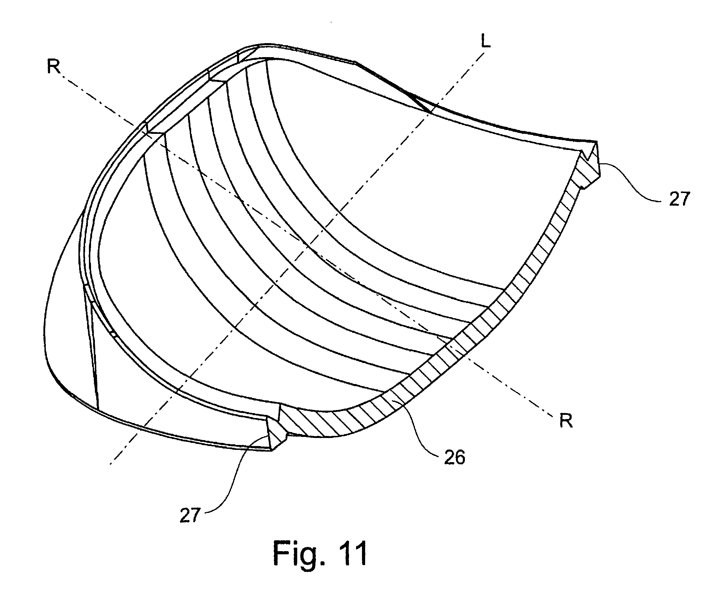

Another acoustic elbow 20 will now be described in reference to figures 10-11.

The acoustic elbow 20 comprises in this embodiment an upstream socket 21, a downstream socket 22, and a curved portion 20a in-between with an opening 23, with an angle of about 90° between the axis of the upstream socket 21 and the axis of the downstream socket 22.

The elbow 20 is provided in its curved portion 20a with an impact piece 26, in order to dampen the shocks caused by the flow of the fluid and any solids entrained by the fluid in the pipeline. The impact piece 26 is preferably flexible.

As can be seen on figures 10-11, the impact piece 26 is curved both in the longitudinal direction (L) and in the radial direction (R). The radial and longitudinal curvatures of the impact piece 26 allow the impact piece 26 to closely follow the shape of the curved portion 20a of the elbow. The radial and longitudinal curvatures are preferably constant in each direction

Furthermore, the impact piece 26 in the elbow is such that the surface of the impact piece 26 forms with the inner surface of the upstream socket 21, at the junction therebetween, a substantially continuous surface. In other words, the impact piece 26, when inserted into the opening, takes the form of the elbow.

The impact piece 26 has, toward the outside, a collar 27 adapted to cooperate with a limit stop 29a, 29b of the upstream socket 21, respectively downstream socket 22. The limit stop 29a, 29b, projects from the upstream socket 21, respectively downstream socket 22, longitudinally towards the inside of the opening 23. As shown on the figures, the limit strop 29a, 29b is preferably annular, most preferably along the entire perimeter of the opening 23. The limit stop may comprise at least one stop portion which is not necessarily annularly continuous, as long as the stop portion is recovered radially by the impact piece abutting against the limit stop 29a, 29b.

The collar 27 is adapted to abut against said limit stop 29a, 29b. The collar 27 is further adapted to abut against a guide bearing 28 of the opening 23. The guide bearing 28 projects radially towards the outside, mainly at a position corresponding to a bottom of the limit stop 29a, 29b. The limit stop and the guide bearing roughly forms a step like configuration.

Hence, when inserted, the impact piece abuts against said limit stop 29a, 29b, which serves as a stop for the impact piece 26 in the radial direction. The impact piece is also guided by the bearing 28, in a longitudinal direction, ensuring therefore a good positioning of the impact piece 26 in the curved portion of the acoustic elbow.

Further, the radial width of the limit stop 29a, 29b mainly corresponds to a radial width of the impact piece 26. Due to the corresponding radial widths, the impact piece, when positioned into the elbow 20, comes into register with the annular limit stop 29 projecting from the upstream and downstream sockets 21, 22. Advantageously, the inside surface of the elbow is mainly continuous at the junction between the socket and the impact piece.

Although the limit stop is shown as an annular limit stop, the man skilled in the art will readily appreciate that the limit stop could be formed by at least one stop projecting longitudinally towards the inside of the opening and adapted to retain the impact piece without extending over the entire perimeter of the opening.

This step like configuration formed by the radial bearing and the limit stop advantageously provides a good isolation and ensures a tight closure of the elbow.

Finally, the collar 27 is held by a plug 24 which is adapted to close the opening 23. The plug 24 that is secured, for example, by ratchet, by screwing, by clipping, by gluing or by welding.

The plug 24 is ratcheted, clipped, glued or welded to the bearing 28, delimiting the opening 23. To ensure a tight closure, a gasket is provided between the plug 24 and the collar 27 or the body.

The invention has been described with examples that are illustrative and not limiting. It also covers those variants falling within the apended claims.

## Claims

1. Acoustic elbow for fluid transport pipelines in buildings and networks, comprising an upstream socket (1; 21), a downstream socket (2; 22), and an opening (3; 23) closed by a plug (4; 24), the elbow having a curved portion (20b) between the upstream socket (1; 21) and the downstream socket (2; 22), wherein a flexible impact piece (6; 26) is inserted in the opening (3;23), forming the inner complementary surface of the elbow,
the impact piece being adapted to abut against a stop (9; 29) projecting from the upstream socket and/or the downstream socket towards the opening, the impact piece (6; 26) comprising a radial curvature in a radial direction and a longitudinal curvature in the longitudinal direction such that an internal surface of the impact piece (6; 26) comes into register with an internal surface of the upstream socket and/or the downstream socket, respectively, the radial curvature and the longitudinal curvature of the impact piece (6; 26) being adapted to allow the impact piece (6; 26) to conform to the inner shape of the curved portion (20b).

2. Elbow according to claim 1, **characterized in that** the axis of the opening (3) essentially corresponds to the bisector of the angle formed by the axes of the two sockets (1, 2).

3. Elbow according to claim 1 or 2, **characterized in that** the impact piece (6; 26) has a collar (7; 27) toward the outside, and the opening (3; 23) has a guide bearing (8; 28) for the collar (7).

4. Elbow according to claim 3, **characterized in that** the stop (9; 29) is an annular limit stop (9) for retention of the collar (7; 27) of the impact piece (6; 26).

5. Elbow according to claim 4, **characterized in that** the plug (4; 24), when put in place at the opening (3; 23), maintains the collar (7; 27) in the bearing (8; 28).

6. Elbow according to any one of claims 1 to 4, wherein the guide bearing (8; 28) and the limit stop (9; 29) forms a step like configuration, adapted for a tight closure of the opening when the impact piece abuts against the limit stop (9; 29).

7. Elbow according to claim 5 or 6, **characterized in that** the plug (4) maintains the collar (7) by means of a brace (10).

8. Elbow according to any one of claims 1 to 7, **characterized in that** the impact piece (6) has a flap (11) that is applied to the inside of the downstream socket (2) of the elbow.

9. Elbow according to any one of claims 1 to 8, **characterized in that** the space (12; 212) between the impact piece (6; 26) and the plug (4; 24) is filled with a gas and/or a soundproofing agent.

10. Elbow according to any one of claims 1 to 9, **characterized in that** the opening (3; 23), the plug (4), the impact piece (6; 26) and the brace (10), if any, are similar in shape, in particular in shape of a circle or a polygon.

11. Elbow according to any one of claims 1-10, wherein a radial width of the limit stop (9; 29) mainly corresponds to a radial width of the impact piece (6; 26).

12. Elbow according to any one of claims 1 to 11, wherein at least one of the radial curvature and of the longitudinal curvature of the impact piece (6; 26) is constant along the radial, respectively longitudinal direction.

13. Elbow according to any one of claims 1 to 12, wherein the plug and the impact piece are formed as one piece member.

14. Elbow according to any one of claims 1 to 13, wherein the plug and the impact piece are connected by means of a ratchet, a clip, glue or welding.

## Patentansprüche

1. Geräuschoptimiertes Knie für Fluidtransportrohre in Gebäuden und Netzwerken, umfassend einen flussaufwärtsliegenden Anschluss (1; 21), einen flussabwärtsliegenden Anschluss (2, 22), sowie eine Öffnung (3; 23), die durch ein Verschlusspart(4; 24) verschlossen ist, wobei das Knie über einen gekrümmten Abschnitt (20b) zwischen dem flussaufwärtsliegenden Anschluss (1; 21) und dem flussabwärtsliegenden Anschluss (2; 22) verfügt, wobei ein flexible Aufprallteil oder Aufprallpart (6; 26) in die Öffnung (3; 23) eingesetzt ist, die die innere Komplemertärfläche des Knies ausbildet, wobei das Aufprallteil oder der Aufprallpart ausgelegt ist zum Anschlagen gegen einen von dem flussaufwärtsliegenden Anschluss und/oder dem flussabwärtsliegenden Anschluss hin zu der Öffnung vorspringenden Anschlagklammer (9; 29), wobei der Aufprallpart (6; 26) eine Radialkrümmung in einer radialen Richtung und eine Longitudinalkrümmung in der Longitudinalrichtung derart aufweist, dass eine Innenfläche des Aufprallparts (6; 26) in Flucht gelangt mit einer Innenfläche des flussaufwärtsliegenden Anschlusses und/oder des flussabwärtsliegenden Anschlusses, und zwar jeweils, wobei die radiale Krümmung und die longitudinale Krümmung des Aufprallparts (6; 26) ausgelegt sind um es dem Aufprallpart (6; 26) zu ermöglichen der Innenform des gekrümmten Abschnittes (20b) zu entsprechen.

2. Knie gemäß Anspruch 1, dadurch gekenntzeichnet, dass die Achse der Öffnung (3) im Wesentlichen der Winkelhalbierenden bezüglich des durch die Achsen der zwei Anschlüsse (1; 2) gebildeten Winkel entspricht.

3. Knie gemäß Anspruch 1 oder 2, **dadurch gekennzeichnet, dass** der Aufprallpart (6; 26) nach außen hin einen Kragen (7; 27) aufweist, wobei die Öffnung (3; 23) über ein Führungslager (8; 28) für den Kragen (7) verfügt.

4. Knie gemäß Anspruch 3, **dadurch gekennzeichnet, dass** der Anschlag (9; 29) ein ringförmiger Begrenzungsanschlag (9) für das Zurückhalten des Kragens (7; 27) des Aufprallparts (6; 26) ist.

5. Knie gemäß Anspruch 4, **dadurch gekennzeichnet, dass** der Verschlusspart (4; 24), wenn in der Öffnung (3; 23) angeordnet den Kragen (7; 27) in dem Lager (8; 28) hält.

6. Knie gemäß einem der Ansprüche 1 bis 4, bei welchem das Führungslager (8; 28) und der Begrenzungsanschlag (9; 29) eine stufenartige Konfiguration ausbilden, ausgelegt für ein dichtes Verschließen der Öffnung, wenn der Aufprallpart anliegt oder anschlägt gegen den Begrenzungsanschlag (9; 29).

7. Knie nach einem der Ansprüche 5 oder 6, dadurch gekenntzeichnet, dass der Verschlusspart (4) den Kragen (7) mittels einer Verstärkung (10) hält.

8. Knie gemäß einem der Ansprüche 1 bis 7, **dadurch gekennzeichnet, dass** das Aufprallpart (6) über eine Lasche (11) verfügt, angewendet bezüglich dem inneren des flussabwärtsliegenden Anschlusses (2) des Knies.

9. Knie gemäß einem der Ansprüche 1 bis 8, dadurch gekenntzeichnet, dass der Raum (12; 212) zwischen dem Aufprallpart (6; 26) und dem Verschlusspart (4; 24) mit einem gas- und/oder einem geräuschdämpfenden Mittel gefüllt. ist.

10. knie gemäß einem der Ansprüche 1 bis 9, **dadurch gekennzeichnet, dass** die Öffnung (3; 23), der Verschlusspart (4), der Aufprallpart (6; 26) und die Verstärkung (10), insoweit vorhanden, von ähnlicher Form sind, insbesondere in der Form eines Kreises oder eines Polygons.

11. Knie nach einem der Ansprüche 1 bis 10, bei welchem eine radiale Breite des Begrenzungsanschlages (9; 29) im Wesentlichen einer radialen Breite des Aufprallparts (6; 26) entspricht.

12. Knie gemäß einem der Ansprüche 1 bis 11, bei welchem zumindest eine von der radialen Krümmung und der longitudinalen Krümmung des Aufprallparts (6; 26) konstant ist entlang der radialen beziehungsweise der longitudinalen Richtung.

13. Knie gemäß einem der Ansprüche 1 bis 12, bei welchem der Verschlusspart und der Aufprallpart als einstückiges oder integrales Element ausgebildet sind.

14. Knie nach einem der Ansprüche 1 bis 13, bei welchem der Verschlusspart oder das Verschlusselement und der Aufprallpart verbunden sind vermittels einer Rastung, einem Clip, Klebung oder Verschweißung.

## Revendications

1. Coude acoustique pour canalisations de transport de fluide dans les bâtiments et réseaux, comportant une emboîture amont (1; 21), une emboîture aval (2 ; 22) et une ouverture (3 ; 23) fermée par un bouchon (4 ; 24), le coude ayant une partie incurvée (20b) entre l'emboîture amont (1 ; 21) et l'emboîture aval (2 ; 22), dans lequel, dans l'ouverture (3 ; 23) est insérée une pièce d'impact (6 ; 26), souple, formant la surface interne complémentaire du coude, la pièce d'impact (6 ; 26) étant adaptée pour venir en butée contre une butée (9 ; 29) projetant depuis l'emboiture amont et/ou l'emboiture aval vers l'ouverture, la pièce d'impact (6 ; 26) comprenant une courbure radiale dans une direction radiale et une pour-bure longitudinale dans la direction longitudinale de sorte qu'une surface interne de la pièce d'impact (6 ; 26) est en registre avec une surface interne de l'emboiture amont et/ou de l'emboiture aval, respectivement, la courbure radiale et la courbure longitudinale de la pièce d'impact (6 ; 26) étant prévues pour permettre à la pièce d'impact (6 ; 26) de se conformer à la forme interne de la partie incurvée (20b).

2. Coude selon la revendication 1, **caractérisé en ce que** l'axe de l'ouverture (3) correspond sensiblement à la bissectrice de l'angle formé par les axes des deux emboîtures (1,2).

3. Coude selon la revendication 1 ou 2, **caractérisé en ce que** la pièce d'impact (6 ; 26) comporte vers l'extérieur une collerette (7 ; 27), et l'ouverture (3 ; 23) comporte un palier (8 ; 28) de guidage de la collerette (7 ; 27).

4. Coude selon la revendication 3, **caractérisé en ce que** la butée (9 ; 29) est une butée annulaire limite (9 ; 29) pour retenir la collerette (7 ; 27) de la pièce d'impact (6 ; 26).

5. Coude selon la revendication 4, caractérisé en ce le bouchon (4 ; 24), lorsqu'il est mis en place sur l'ouverture (3 ; 23), assure le maintien de la collerette (7 ; 27) dans le palier (8 ; 28).

6. Coude selon l'une quelconque des revendications 1 à 4, dans lequel le palier de guidage (8 ; 28) et la butée limite (9 ; 29) forment une configuration marché d'escalier, adaptée pour une fermeture étanche de l'ouverture lorsque la pièce d'impact est en butée contre la butée limite (9 ; 29).

7. Coude selon la revendication 5 ou 6, **caractérisé en ce que** le bouchon (4) assure le maintien de la collerette (7) par l'intermédiaire d'une entretoise (10).

8. Coude selon l'une quelconque des revendications 1 à 7, **caractérisé en ce que** la pièce d'impact (6) comporte une bavette (11) qui s'applique à l'intérieur de l'emboîture aval (2) du coude.

9. Coude selon l'une quelconque des revendications 1 à 8, **caractérisé en ce que** l'espace (12 ; 212) entre la pièce d'impact (6 ; 26) et le bouchon (4 ; 24) est rempli par un gaz et/ou un isolant acoustique.

10. Coude selon l'une des revendications 1 à 9, **caractérisé en ce que** l'ouverture (3 ; 23), le bouchon (4 ; 24), la pièce d'impact (6 ; 26) et l'entretoise (10) éventuelle sont de forme similaire, en particulier de forme circulaire ou polygonale.

11. Coude selon l'une des revendications 1 à 10, dans lequel une largeur radiale de la butée (9 ; 29) correspond sensiblement à une largeur radiale de la pièce d'impact (6 ; 26).

12. Coude selon l'une des revendications 1 à 11, dans lequel au moins l'une de la courbure radiale et de la courbure longitudinale de la pièce d'impact (6 ; 26) est constante le long de la direction radiale, respectivement de la direction longitudinale.

13. Coude selon l'une des revendications 1 à 12, dans lequel le bouchon et la pièce d'impact sont formés en une seule pièce.

14. Coude selon l'une des revendications 1 à 13, dans lequel le bouchon et la pièce d'impact sont reliés au moyen d'un élément de cliquet, d'un clip, par collage ou soudage.
